# EUROPÄISCHE PATENTSCHRIFT

(11) **EP 2 196 580 B1**
(45) Veröffentlichungstag und Bekanntmachung des Hinweises auf die Patenterteilung: **05.03.2014**
(21) Anmeldenummer: 08021460.4
(22) Anmeldetag: 10.12.2008
(51) Int. Cl.: E01B 9/18, F16B 3/06, F16B 35/04, F16B 37/12

(54) **Schraubdübel mit konischer Form für Schienenbefestigungen**
Screw-plug with conical shape for rail fastening systems
Vis-cheville à forme conique pour systèmes de fixation de rails

(43) Veröffentlichungstag der Anmeldung: 16.06.2010
(73) Patentinhaber: Vossloh-Werke GmbH, 58791 Werdohl (DE)
(72) Erfinder: Bösterling, Winfried, 58809 Neuenrade (DE); Hunold, André, 58636 iSERLOHN (DE); Gart, Eugen, 58511 Lüdenscheid (DE)
(74) Vertreter: HOFFMANN EITLE

(56) Entgegenhaltungen:
- EP-A1- 0 821 103
- GB-A- 865 120

## Beschreibung

### Gebiet der Erfindung

Die Erfindung betrifft einen Schraubdübel nach dem Oberbegriff des Anspruchs 1 für das Einbetonieren in eine Feste Fahrbahn oder Eisenbahnschwelle sowie für die kraftschlüssige Verbindung mit einem Befestigungselement. Weiterhin betrifft die Erfindung einen derartigen Schraubdübel mit eingeschraubtem Befestigungselement sowie eine Feste Fahrbahn oder Eisenbahnschwelle mit mindestens einem erfindungsgemäßen Schraubdübel.

### Stand der Technik

Schraubdübel für das Einbetonieren in eine Feste Fahrbahn oder Eisenbahnschwelle dienen beim Eisenbahnbau zur Verbindung von Schiene und Unterbau in Form einer Schwelle bzw. Fester Fahrbahn. Dabei wird die Schienenbefestigung über Schwellenschrauben mit dem Unterbau verbunden. Schraubdübel bestehen üblicherweise aus Kunststoff und können bei der Herstellung einer Betonschwelle oder Festen Fahrbahn in diese eingegossen werden. Ein weiterer Grund für das Vorsehen eines Dübels aus Kunststoff besteht darin, dass eine elektrische Isolierung der Schwellenschraube gegenüber der Schwelle oder Festen Fahrbahn erfolgen soll.

Der Nachteil herkömmlicher Schraubdübel/Schwellenschraubenbefestigungen besteht darin, dass diese häufig keine ausreichend hohen Seitenkräfte von der Schienenbefestigung in die Schwelle übertragen können.

Die EP 0 821 103 A1 beschreibt einen Kunststoffdübel mit Innengewinde für Schraubverbindungen an Betonfertigteilen. Um die Dauerstandfestigkeit und Ausreißfestigkeit zu verbessern werden dem Dübel aus Polyamid Glasfasern und UV-Stabilisatoren beigemischt. Der Dübel ist mit einem Innengewinde versehen, das als Trapez- oder Rundgewinde ausgestaltet ist und weist am Außenumfang ringförmige Rücksprünge auf.

Der aus der GB 865,120 A bekannte Dübel dient der Gleisbefestigung und besteht aus zwei in Längsrichtung aneinander angrenzenden Abschnitten, einem ersten Abschnitt mit im Wesentlichen zylinderförmigen Außenform und einem zweiten Abschnitt mit im Wesentlichen konischer Außenform. Innen- und Außengewinde des Dübels weisen dieselbe Steigung auf. Die GB 865,120 A stellt den nächstkommenden Stand der Technik dar.

### Darstellung der Erfindung

Der Erfindung liegt die Aufgabe zugrunde, einen Schraubdübel für das Einbetonieren in eine Eisenbahnschwelle oder Feste Fahrbahn vorzuschlagen, der erhöhte Seitenkräfte von der Schienenbefestigung in die Eisenbahnschwelle oder Feste Fahrbahn übertragen kann. Diese Aufgabe wird durch einen Schraubdübel mit den Merkmalen des Anspruchs 1 gelöst. Bevorzugte Ausführungsformen der Erfindung folgen aus den übrigen Ansprüchen.

Erfindungsgemäß umfasst ein Schraubdübel für das Einbetonieren in eine Eisenbahnschwelle oder Feste Fahrbahn und für die kraftschlüssige Verbindung mit einem Befestigungselement außen am Schraubdübel angeordnete Außengewindegänge sowie innen im Schraubdübel angeordnete Innengewindegänge. Der Schraubdübel besteht aus zwei in Längsrichtung aneinander angrenzenden Abschnitten, einem ersten Abschnitt mit im Wesentlichen zylinderförmiger Außenform sowie einem zweiten Abschnitt mit im Wesentlichen konischer Außenform. Der zweite Abschnitt ist dabei zwischen erstem Abschnitt und einer Einführöffnung für das Befestigungselement angeordnet. Mit anderen Worten weist der Schraubdübel eine zur Einführöffnung hin gelegene konische Krone auf, die den Vorteil hat, dass sich mit zunehmender konischer Aufweitung die Kontaktfläche zwischen Dübel und der umgebenden Eisenbahnschwelle oder Festen Fahrbahn erhöht, zum anderen aber auch die zur Übertragung von Lateralkräften zur Verfügung stehende Querschnittsfläche erhöht. Auf diese Weise lässt sich die Flächenpressung zwischen Befestigungselement und Dübel verringern.

Nach der Erfindung ist das Innengewinde ein Trapezgewinde und besitzt eine deutlich geringere Steigung als das Außengewinde. Der Vorteil eines Trapezgewindes besteht darin, dass mit einem Trapezgewinde große Kräfte übertragen werden können und die Gewindefurchen im Dübel eine stumpfe Geometrie aufweisen mit einem in Umfangsrichtung angeordneten Nutgrund der einzelnen Gewindefurchen. Andererseits besteht beispielsweise bei einem Gewinde mit in spitzem Winkel aufeinander zulaufenden Flanken des Innengewindes die Gefahr, dass sich ausgehend vom Nutgrund der Gewindefurchen Risse in das Material des Schraubdübels fortsetzen.

Vorzugsweise ist das Außengewinde ein Rundgewinde, wodurch sich die von dem Befestigungselement auf den Dübel übertragenen Kräfte gut in das umgebende Material der Eisenbahnschwelle oder Festen Fahrbahn einleiten lassen.

Nach einer bevorzugten Ausführungsform weist die konische Außenform des zweiten Abschnitts bereichsweise mindestens eine in Längsrichtung des Schraubdübels verlaufende Rippe auf. Jede Rippe wirkt dabei als ein Formschlusselement und dient dazu, ein unerwünschtes Verdrehen des Schraubdübels relativ zur Betonschwelle oder Festen Fahrbahn zu verhindern, was zur Funktionssicherheit des Schraubdübels beiträgt und zudem die vom Schraubdübel in die Betonschwelle oder Feste Fahrbahn übertragbaren Radialkräfte erhöht. Aus dem gleichen Grund kann auch die zylinderförmige Außenform des ersten Abschnitts bereichsweise mindestens eine in Längsrichtung des Schraubdübels verlaufende Rippe aufweisen.

Der Schraubdübel mit eingeschraubtem Befestigungselement ist dadurch gekennzeichnet, dass der zweite Abschnitt mit konischer Außenform eine konische Innenform mit geraden Flanken aufweist, wobei die konische Innenform so dimensioniert ist, dass diese flächig an einem Außenkonus des Befestigungselements anliegt. Die Abstimmung der konischen Flächen aufeinander in Bezug auf die Abmessungen und die Winkel dient dazu, eine möglichst vollflächige Anlage zwischen dem Außenkonus des Befestigungselements und der konischen Innenform des Dübels zu erreichen. Diese Maßnahme dient ebenfalls dazu, durch die möglichst großflächige Anlage möglichst hohe Kräfte vom Befestigungselement über den Dübel in die Schwelle oder Feste Fahrbahn übertragen zu können.

Vorzugsweise besitzt das Befestigungselement ein Einschraubgewinde, welches in das Innengewinde des Schraubdübels eingeschraubt ist, wobei sich das Innengewinde des Schraubdübels zumindest über einen Teil des ersten Abschnitts erstreckt. Auf diese Weise wird die Gewindepaarung zur Befestigung des Befestigungselements im Dübel in zumindest einen Teil des ersten Abschnitts gelegt, während im verbleibenden Teil des Schraubdübels kein Innengewinde angeordnet ist und eine möglichst vollflächige Verbindung zwischen Befestigungselement und Dübel hergestellt werden kann. Je kleiner der Bereich der Gewindeverbindung zwischen Befestigungselement und Schraubdübel ausgeführt wird, desto geringer ist die erzielbare Ausziehfestigkeit in axialer Richtung zwischen Befestigungselement und Schraubdübel. Im Gegenzug dazu kann aber im übrigen Bereich eine möglichst vollflächige Anlage zur Überragung hoher lateraler Kräfte erzeugt werden.

Das Befestigungselement besitzt vorzugsweise einen zylinderförmigen Abschnitt, an den sich der Außenkonus anschließt. Indem sich das Einschraubgewinde des Befestigungselements über den gesamten zylinderförmigen Abschnitt und einen Teil des Außenkonus erstreckt, kann eine sehr hohe Auszugsfestigkeit zwischen Befestigungselement und Schraubdübel verwirklicht werden.

Vorzugsweise ist das Befestigungselement eine Schraube oder ein Ankerbolzen, die direkt mit weiteren Komponenten im Gleisoberbau zusammenwirken, um einen Befestigungspunkt für eine Eisenbahnschiene auf einer Eisenbahnschwelle oder Festen Fahrbahn darzustellen.

### Kurze Beschreibung der Figuren

Nachfolgend wird die Erfindung rein beispielhaft anhand der beiliegenden Figuren beschrieben, in denen
- Fig. 1: eine schematische Außenansicht des erfindungsgemäßen Schraubdübels zeigt;
- Fig. 2: eine Schnittansicht des in Fig. 1 dargestellten Dübels darstellt;
- Fig. 3: ein Ausführungsbeispiel eines zugehörigen Befestigungselements darstellt; und
- Fig. 4: eine Schnittansicht eines gegenüber der Ausführungsform nach Fig. 1 und 2 leicht abgewandelten Schraubdübels mit eingeschraubtem Befestigungselement nach Fig. 3 darstellt.

### Wege zur Ausführung der Erfindung

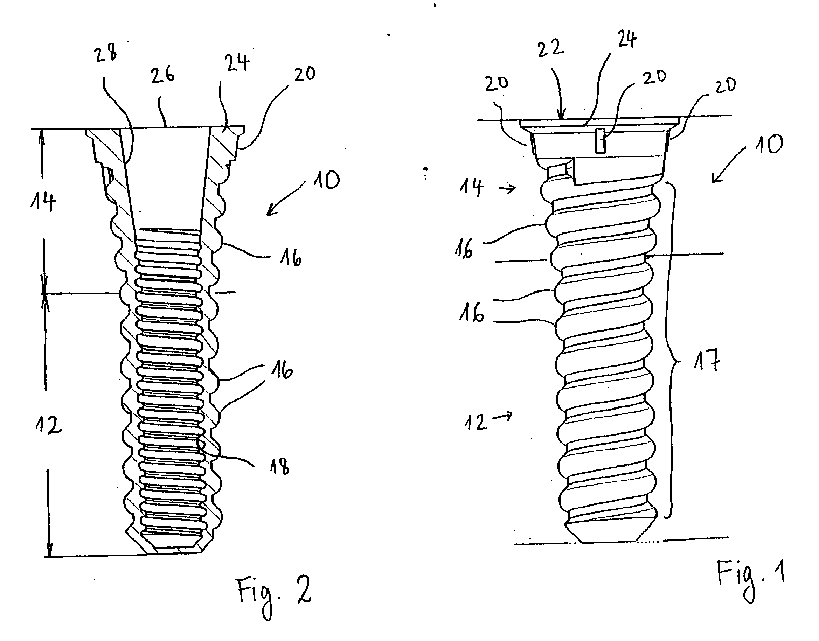

In den nachfolgend erläuterten Figuren werden jeweils dieselben Elemente mit denselben Referenzziffern bezeichnet. Der in Fig. 1 und 2 dargestellte Schraubdübel 10 besteht aus Kunststoffmaterial, vorzugsweise Polyamid, und gliedert sich in mehrere Abschnitte, einen zylinderförmigen ersten Abschnitt 12 sowie einen konischen zweiten Abschnitt 14. Unter dem Begriff zylinderförmiger Abschnitt soll dabei verstanden werden, dass der Außenumfang des Dübels von einem geraden Zylinder umhüllt werden kann. Der konische zweite Abschnitt 14 kann demgemäß im Wesentlichen durch einen Kegelstumpf mit im Wesentlichen geraden Flanken umhüllt werden.

Sowohl im Bereich des ersten Abschnitts 12 wie auch des zweiten Abschnitts 14 befinden sich zahlreiche Gewindegänge 16, die als Rundgewinde ausgestaltet sind. Darüber hinaus ist, wie in Fig. 2 ersichtlich ist, im Inneren des Schraubdübels 10 ein Innengewinde 18 vorgesehen, das sich in Bezug auf die Gewindeform wie auch Gewindesteigung von dem Außengewinde unterscheidet. In der Ausführungsform nach Fig. 1 und 2 ist das Innengewinde erfindungsgemäß als Trapezgewinde ausgeführt, wobei der Begriff "Trapezgewinde" die prinzipielle Form eines üblichen Trapezgewindes bezeichnet, nicht aber die exakte Geometrie entsprechend der Normung bezeichnen soll. Im Vergleich zu den Gewindegängen 16 des Außengewindes weist das Innengewinde 18 eine deutlich geringere Steigung und folglich eine größere Kontaktfläche zwischen dem Schraubdübel und einem zugehörigen Befestigungselement 30 auf, wodurch eine hohe axiale Auszugskraft zwischen Befestigungselement und Schraubdübel resultiert.

Am Außenumfang des zweiten Abschnitts 14 sind mehrere Rippen 20 angeordnet, die in Längsrichtung des Schraubdübels 10 verlaufen und sich unmittelbar an eine an die obere Abschlussfläche 22 des Dübels 10 anschließenden Flanschbereich 24 anschließen. Die Rippen 20 weisen im vorliegenden Ausführungsbeispiel eine im Wesentlichen rechteckige Stegform auf und sind ebenso wie auch der Flanschbereich 24 einstückig mit dem Material des Schraubdübels 10 ausgebildet, wie aus der Schnittdarstellung in Fig. 2 ersichtlich ist.

Der sich an die Einführöffnung 26 des Schraubdübels anschließende, zweite Abschnitt 14 weist, wie in Fig. 2 ersichtlich ist, bis zum Beginn des Innengewindes 18 gerade Flanken 28 auf, die mit einem entsprechend geformten Außenkonus eines Befestigungselements in vollflächige Anlage kommen können.

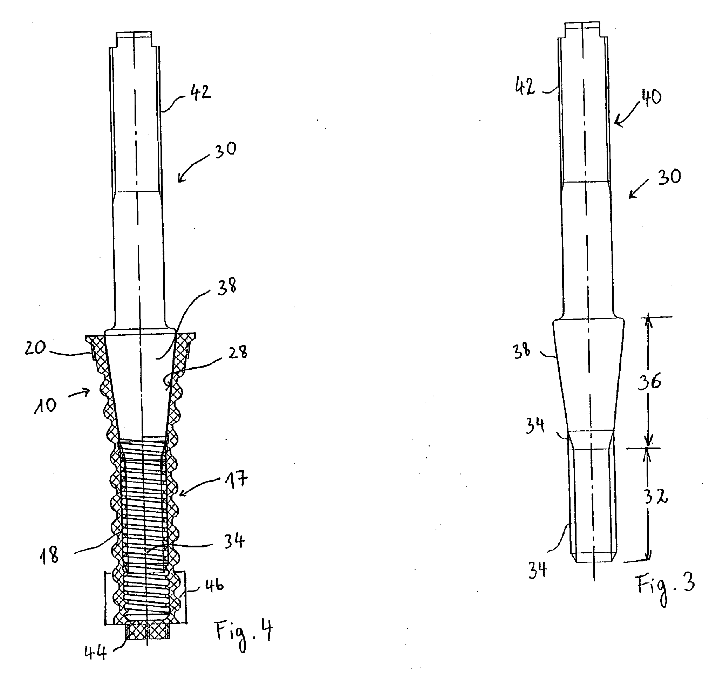

Fig. 3 zeigt ein Ausführungsbeispiel eines Befestigungselements 30 zur Verwendung mit dem erfindungsgemäßen Dübel. Das Befestigungselement ist dabei eine Schraube mit einem ersten Bereich 32, der mit einem zum Innengewinde des Dübels korrespondierenden Schraubgewinde 34 versehen ist, sowie einen sich unmittelbar an den ersten Bereich 32 anschließenden zweiten Bereich 36, der ebenfalls bereichsweise im Anschluss an den ersten Bereich 32 mit dem Schraubgewinde 34 versehen ist. Der zweite Bereich 36 weitet sich mit zunehmendem Abstand vom ersten Bereich 32 kegelförmig auf und besitzt eine ebene Mantelfläche 38 sowie eine Konuswinkel, die auf den Innenkonus des Dübels und die Flanken 28 abgestimmt sind. An den ersten Bereich 32 und zweiten Bereich 36 schließt sich der im Gleisoberbau verwendete und an die speziellen Erfordernisse im Gleisoberbau angepasste Befestigungsbereich 40 an, der in dem in Fig. 3 dargestellten Ausführungsform zusätzlich mit einem Außengewinde 42 versehen ist.

Die Baueinheit bestehend aus Schraubdübel 10 und Befestigungselement 40 ist in Fig. 4 dargestellt. Wie ersichtlich ist, liegt die ebene Mantelfläche 38 des konischen Bereichs des Befestigungselements 40 vollflächig an den Flanken 28 im zweiten Abschnitt des Dübels an. Der erste Bereich des Befestigungselements 30 erstreckt sich im vorliegenden Ausführungsbeispiel nicht bis zum unteren Ende des unten geschlossen ausgeführten Schraubdübels, dessen Außengeometrie im übrigen von derjenigen der Ausführungsformen nach Fig. 1 und 2 abweicht, wie aus dem unteren Ansatz 44 des Schraubdübels im Vergleich zur konischen Spitze nach den Ausführungsformen nach Fig. 1 und 2 ersichtlich ist.

Der Schraubdübel nach der Ausführungsform gemäß Fig. 4 weist zudem zusätzliche Rippen 46 im Bereich des ersten Abschnitts des Schraubdübels auf, die ebenfalls die Funktion besitzen, ein Verdrehen des Schraubdübels relativ zu dem umgebenden Betonmaterial der Eisenbahnschwelle oder Festen Fahrbahn zu verhindern.

Allen dargestellten Ausführungsformen ist gemeinsam, dass der Schraubdübel 10 mit einer konischen Krone versehen ist, so dass im Zusammenwirken mit einem entsprechend geformten Befestigungselement eine erhöhte Lochleibung erzielt werden kann und damit erhöhte Lateralkräfte von der Schienenbefestigung über den Dübel in die Eisenbahnschwelle oder Feste Fahrbahn übertragen werden können.

## Patentansprüche

1. Schraubdübel für das Einbetonieren in eine Eisenbahnschwelle oder Feste Fahrbahn und für die kraftschlüssige Verbindung mit einem Befestigungselement (30) umfassend:
- ein außen am Schraubdübel (10) angeordnetes Außengewinde (17);
- ein innen im Schraubdübel (10) angeordnetes Innengewinde (18); wobei
- der Schraubdübel (10) aus zwei, in Längsrichtung aneinander angrenzenden Abschnitten (12, 14) besteht,
- einem ersten Abschnitt (12) mit im Wesentlichen zylinderförmiger Außenform; und
- einem zweiten Abschnitt (14) mit im Wesentlichen konischer Außenform; und
- der zweite Abschnitt (14) zwischen erstem Abschnitt (12) und einer Einführöffnung (26) für das Befestigungselement (30) angeordnet ist;
**dadurch gekennzeichnet, dass**
- das Innengewinde (18) ein Trapezgewinde ist; und
- das Innengewinde (18) eine deutlich geringere Steigung besitzt als das Außengewinde (17).

2. Schraubdübel nach Anspruch 1,
**dadurch gekennzeichnet, dass**
das Außengewinde (17) ein Rundgewinde ist.

3. Schraubdübel nach einem der vorhergehenden Ansprüche,
**dadurch gekennzeichnet, dass**
die konische Außenform des zweiten Abschnitts (2) bereichsweise mindestens eine in Längsrichtung des Schraubdübels (10) verlaufende Rippe (20) aufweist.

4. Schraubdübel nach einem der vorhergehenden Ansprüche,
**dadurch gekennzeichnet, dass**
die zylinderförmige Außenform des ersten Abschnitts (12) bereichsweise mindestens eine in Längsrichtung des Schraubdübels (10) verlaufende Rippe (46) aufweist.

5. Schraubdübel mit eingeschraubtem Befestigungselement (30),
**dadurch gekennzeichnet, dass**
der zweite Abschnitt (14) des Schraubdübels (10) mit konischer Außenform eine konische Innenform mit geraden Flanken (28) aufweist und so dimensioniert ist, dass die konische Innenform flächig an einem Außenkonus (38) des Befestigungselements (30) anliegt.

6. Schraubdübel nach Anspruch 5,
**dadurch gekennzeichnet, dass**
das Befestigungselement (30) ein Einschraubgewinde (34) besitzt, welches in das Innengewinde (18) des Schraubdübels (10) eingeschraubt ist, wobei sich das Innengewinde (18) des Schraubdübels (10) zumindest über einen Teil des ersten Abschnitts (12) erstreckt.

7. Schraubdübel nach Anspruch 6,
**dadurch gekennzeichnet, dass**
das Befestigungselement (30) einen zylinderförmigen Bereich (32) aufweist, an den sich der Außenkonus (38) anschließt; und das Einschraubgewinde (34) des Befestigungselements (30) sich über den gesamten zylinderförmigen, ersten Bereich (32) und einen Teil des Außenkonus (38) erstreckt.

8. Schraubdübel nach einem der Ansprüche 5 bis 7,
**dadurch gekennzeichnet, dass**
das Befestigungselement (30) eine Schraube ist.

9. Schraubdübel nach einem der Ansprüche 5 bis 7,
**dadurch gekennzeichnet, dass**
das Befestigungselement (30) ein Ankerbolzen ist.

10. Eisenbahnschwelle mit mindestens einem Schraubdübel nach einem der vorhergehenden Ansprüche.

11. Feste Fahrbahn mit mindestens einem Schraubdübel nach einem der Ansprüche 1 bis 9.

## Claims

1. Screw plug for setting in concrete in a railway sleeper or slab track and for force-fit connection to a fastening element (30) comprising:
- an external thread (17) arranged on the outside of the screw plug (10);
- an internal thread (18) arranged on the inside of the screw plug (10); wherein
- the screw plug (10) consists of two sections (12, 14) adjoining each other in the longitudinal direction,
- a first section (12) of substantially cylindrical external shape; and
- a second section (14) of substantially conical external shape; and
- the second section (14) is arranged between the first section (12) and an insertion opening (26) for the fastening element (30);
**characterised in that**
- the internal thread (18) is a trapezoidal thread; and
- the internal thread (18) has a much smaller pitch than the external thread (17).

2. Screw plug according to claim 1, **characterised in that** the external thread (17) is a round thread.

3. Screw plug according to any of the preceding claims, **characterised in that** the conical external shape of the second section (2) in one region has at least one rib (20) running in the longitudinal direction of the screw plug (10).

4. Screw plug according to any of the preceding claims, **characterised in that** the cylindrical external shape of the first section (12) in one region has at least one rib (46) running in the longitudinal direction of the screw plug (10).

5. Screw plug with fastening element (30) screwed in, **characterised in that** the second section (14) of the screw plug (10) with the conical external shape has a conical internal shape with straight flanks (28) and has dimensions such that the conical internal shape lies flush against an outer cone (38) of the fastening element (30).

6. Screw plug according to claim 5, **characterised in that** the fastening element (30) has a screw-in thread (34) which is screwed into the internal thread (18) of the screw plug (10), wherein the internal thread (18) of the screw plug (10) extends at least over a portion of the first section (12).

7. Screw plug according to claim 6, **characterised in that** the fastening element (30) has a cylindrical region (32) which is adjoined by the outer cone (38); and the screw-in thread (34) of the fastening element (30) extends over the whole of the cylindrical first region (32) and a portion of the outer cone (38).

8. Screw plug according to any of claims 5 to 7, **characterised in that** the fastening element (30) is a screw.

9. Screw plug according to any of claims 5 to 7, **characterised in that** the fastening element (30) is an anchor bolt.

10. Railway sleeper having at least one screw plug according to any of the preceding claims.

11. Slab track having at least one screw plug according to any of claims 1 to 9.

## Revendications

1. Vis-cheville à sceller dans le béton d'une traverse de chemin de fer ou d'une voie ferrée sans ballast et à assembler par force à un élément de fixation (30), comprenant :
- un filet mâle (17) extérieur à la vis-cheville (10) ;
- un filet femelle (18) intérieur à la vis-cheville (10) ;
- la vis-cheville (10) étant constituée de deux segments (12, 14) adjacents l'un à l'autre dans le sens de la longueur,
- un premier segment (12) de forme extérieure sensiblement cylindrique ; et
- un deuxième segment (14) de forme extérieure sensiblement conique ; et
- le deuxième segment (14) étant situé entre le premier segment (12) et une ouverture d'insertion (26) pour l'élément de fixation (30) ;
**caractérisée en ce que**
- le filet femelle (18) est un filet trapézoïdal ; et
- le filet femelle (18) est de pas sensiblement inférieur au filet mâle (17).

2. Vis-cheville selon la revendication 1, **caractérisée en ce que**
le filet mâle (17) est un filet rond.

3. Vis-cheville selon l'une des revendications précédentes, **caractérisée en ce que**
la forme extérieure conique du deuxième segment (2) présente partiellement au moins une nervure (20) s'étendant dans le sens de la longueur de la vis-cheville (10).

4. Vis-cheville selon l'une des revendications précédentes, **caractérisée en ce que**
la forme extérieure cylindrique du premier segment (12) présente partiellement au moins une nervure (46) s'étendant dans le sens de la longueur de la vis-cheville (10).

5. Vis-cheville à élément de fixation (30) vissé dans celle-ci, **caractérisée en ce que**
le deuxième segment (14) de la vis-cheville (10) de forme extérieure conique présente une forme intérieure conique avec des flancs (28) droits et est dimensionné de telle manière que la forme intérieure conique soit en contact avec la surface d'un cône extérieur (38) de l'élément de fixation (30).

6. Vis-cheville selon la revendication 5, **caractérisée en ce que**
l'élément de fixation (30) présente un filet (34) vissé dans le filet femelle (18) de la vis-cheville (10), ledit filet femelle (18) de la vis-cheville (10) s'étendant au moins sur une partie du premier segment (12).

7. Vis-cheville selon la revendication 6, **caractérisée en ce que**
l'élément de fixation (30) présente une zone cylindrique (32), à laquelle le cône extérieur (38) est adjacent ; et le filet (34) de l'élément de fixation (30) s'étend sur toute la première zone (32) et une partie du cône extérieur (38).

8. Vis-cheville selon l'une des revendications 5 à 7, **caractérisée en ce que**
l'élément de fixation (30) est une vis.

9. Vis-cheville selon l'une des revendications 5 à 7, **caractérisée en ce que**
l'élément de fixation (30) est un boulon d'ancrage.

10. Traverse de chemin de fer comportant au moins une vis-cheville selon l'une des revendications précédentes.

11. Voie ferrée sans ballast comportant au moins une vis-cheville selon l'une des revendications 1 à 9.
